(19) Europäisches Patentamt / European Patent Office / Office européen des brevets

(11) **EP 2 015 504 A2**

(12) **EUROPEAN PATENT APPLICATION**

(43) Date of publication:
**14.01.2009 Bulletin 2009/03**

(51) Int Cl.:
***H04L 5/00*** (2006.01)

(21) Application number: **08012611.3**

(22) Date of filing: **11.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.07.2007 US 929791 P**
**16.07.2007 US 929869 P**
**12.06.2008 US 213012**

(71) Applicant: **Samsung Electronics Co., Ltd**
**Suwon-si, Gyeonggi-do 443-742 (KR)**

(72) Inventors:
• **Cho, Joon-Young**
**c/o Samsung Electronics Co., Ltd.**
**Suwon-si**
**Gyeonggi-do 443-742 (KR)**

• **Khan, Farooq**
**c/o Samsung Electronics Co., Ltd.**
**Suwon-si**
**Gyeonggi-do 443-742 (KR)**
• **Zhang, Jianzhong**
**c/o Samsung Electronics Co., Ltd.**
**Suwon-si**
**Gyeonggi-do 443-742 (KR)**
• **Pi, Zhouyue**
**c/o Samsung Electronics Co., Ltd.**
**Suwon-si**
**Gyeonggi-do 443-742 (KR)**

(74) Representative: **Grünecker, Kinkeldey,**
**Stockmair & Schwanhäusser**
**Anwaltssozietät**
**Leopoldstrasse 4**
**80802 München (DE)**

(54) **Transmit methods for CCFI/PCFICH in a wireless communication system**

(57) A method of transmitting a control channel format indicator (CCFI), also known as PCFICH (Physical Control Format Indicator Channel), in case where the length of a coded CCFI is not an integer multiple of three, including mapping a plurality of two-bit CCFI into a codebook with each component codeword having three bits; generating a sequence of codewords selected from the codebook by repeating the selected component codeword for predetermined times; generating a codeword by concatenating the sequence of the selected component codewords with the original CCFI bits; and transmitting the codeword carrying information of CCFI. The method further includes a step of generating a permutation of each of the four codewords by assigning K repetitions of the three-bit component codeword to the number of K resource units respectively and mapping remaining K bits of each of the four codewords separately to the number of K resource units.

110 110 110 110 110 110 110 110    110 110 11 (cw 4)

first 8 REPETITIONS      REMAINING 8 BITS

↓ MAP THE FIRST 8 REPETITIONS OF(110) TO THE 8 1x2 RUs

| 1 1 0 – | 1 1 0 – | 1 1 0 – | 1 1 0 – | 1 1 0 – | 1 1 0 – | 1 1 0 – | 1 1 0 – | INTERMEDIAT BIT SEQUENCE |
| RU #1 | RU #2 | RU #3 | RU #4 | RU #5 | RU #6 | RU #7 | RU #8 | |

↓ MAP THE REMAINING 8 BITS TO THE LAST BIT IN EACH RU

| 1 1 0 1 | 1 1 0 1 | 1 1 0 0 | 1 1 0 1 | 1 1 0 1 | 1 1 0 0 | 1 1 0 1 | 1 1 0 1 | RESULTING BIT SEQUENCE |
| RU #1 | RU #2 | RU #3 | RU #4 | RU #5 | RU #6 | RU #7 | RU #8 | |

FIG.4

EP 2 015 504 A2

**Description**

**BACKGROUND OF THE INVENTION**

**Field of the Invention**

The present invention relates to a method and apparatus for coding a CCFI (Control Channel Format Indicator) channel, also known as PCFICH (Physical Control Format Indicator Channel), and more particularly, to a method and apparatus for coding a CCFI channel using a concatenation of repeated (3,2) codewords and original CCFI bits, for the case where a total result coded length of CCFI is not an integer multiple of three.

**Description of the Related Art**

Orthogonal Frequency Division Multiplexing (OFDM) is a technology to multiplex data in frequency domain. Modulation symbols are carried on frequency sub-carriers. The total bandwidth in an OFDM system is divided into narrowband frequency units called subcarriers. The number of subcarriers is equal to the FFT/IFFT size N used in the system. In general, the number of subcarriers used for data is less than N because some of the subcarriers located at the edge of the frequency spectrum are reserved as guard subcarriers. In general, no information may be transmitted on guard subcarriers.

A typical cellular radio system includes a collection of fixed base stations (BS) that define a radio coverage area or a cell. Typically, a non-line-of-sight (NLOS) radio propagation path exists between a base station and a mobile station due to natural and man-made objects that are situated between the base station and the mobile station. As a consequence, the radio waves propagate via reflections, diffractions and scattering. The arriving waves at the mobile station (MS) in the downlink direction (at the BS in the uplink direction) experience constructive and destructive additions because of different phases of the individual waves. This is due the fact that, at high carrier frequencies typically used in the cellular wireless communication, small changes in the differential propagation delays introduces large changes in the phases of the individual waves. When the MS is moving or changes occur in the scattering environment, the spatial variations in the amplitude and phase of the composite received signal will manifest themselves as the time variations known as Rayleigh fading or fast fading. The time-varying nature of the wireless channel requires very high signal-to-noise ratio (SNR) in order to provide desired bit error or packet error reliability.

Diversity is widely used to combat the effect of fast fading. The idea is to provide the receiver with multiple faded replicas of the same information-bearing signal. On the assumption of independent fading of each of the antenna branches, the probability that the instantaneous SNR is below a certain threshold on each branch is approximately $P^L$ where p is the probability that the instantaneous SNR is below the certain threshold on each antenna branch.

The methods of diversity generally fall into the following categories: space, angle, polarization, field, frequency, time and multipath diversity. Space diversity may be achieved by using multiple transmit or receive antennas. The spatial separation between the multiple antennas is chosen so that the diversity branches experience fading with little or no correlation. Transmit diversity uses multiple transmit antennas in order to provide the receiver with multiple uncorrelated replicas of the same signal. Transmit diversity schemes may further be divided into open loop transmit diversity and closed-loop transmit diversity schemes. In an open loop transmit diversity approach, no feedback is required from the receiver. In a known arrangement of a closed loop transmit diversity, the receiver computes the phase and amplitude adjustment that should be applied at the transmitter antennas to maximize the received signal power at the receiver. In another arrangement of the closed loop transmit diversity referred to as selection transmit diversity (STD), the receiver provides feedback information to the transmitter on antenna(s) to be used for transmission.

Dynamic Category 0 (Cat 0) bits are a LTE terminology used in 3GPP LTE standard body. The role of Cat0 is to support dimensioning (scaling) of the downlink control channel by indicating the number of downlink and uplink scheduling grants. The current working assumption is that the dynamic Cat0 bits have a maximum size of two bits, and the dynamic Cat0 bits should be transmitted once during every subframe where a control channel element (CCE) is present. The information conveyed by Cat0 bits includes, but not limited to, the number of OFDM symbols used for all control channels in the subframe. The transmit diversity of the Cat0 bits is not finalized, and it is the objective of the present invention to provide a simple and efficient transmit diversity scheme that captures both spatial and frequency diversity in the channel. Several approaches of coding and transmit diversity have been proposed for both the Category 0 bits and ACK/NACK channels. In the 3GPP standard RAN1 meeting in May 2007, the Category 0 bits have been renamed as CCFI (Control Channel Format Indicator). In the present invention, one additional coding method is proposed, as well as frequency domain resource mapping methods for the transmission of CCFI channel.

In addition, it was proposed to use a (3,2,2) binary linear code to map the 2 Cat0 bits into a 3-bit codeword $c_1 c_2 c_3$, and this codeword belongs to a codebook of size four with a minimum Hamming distance two between any pairs of codewords. One example of the (3,2) codebook is $c_1 c_2 c_3 \in C_1$ = {111, 100, 010 001}.

Because the size of (3,2) codebook as above presented is three, merely repeating the 3-bit codeword may only be suitable for a case where the length of a coded CCFI is an integer multiple of three. Therefore, it is important to provide a CCFI coding method in a case where the length of a coded CCFI is not an integer multiple of three.

**SUMMARY OF THE INVENTION**

It is therefore one aspect of the present invention to provide an improved process and apparatus for solving the above mentioned problems.

It is another aspect of the present invention to provide a CCFI coding method in a case where the length of a coded CCFI is not an integer multiple of three.

In one embodiment of the present invention, it is proposed to code the CCFI channel using a concatenation of repeated (3,2) codewords and uncoded CCFI, bits, for the case where the total codeword length is not an integer multiple of three. Because the size of the (3,2) codebook as above presented is three and thus it is important to provide a CCFI coding method in a case where the length of a coded CCFI is not an integer multiple of three.

As shown in the table below, a mapping between the two bits CCFI and the component codewords in a (3,2) codebook is established.

| CCFI bits $b_1 b_2$ | Component codeword $c_1 c_2 c_3$ (assuming (3,2) codebook $C_2$) | Component codeword $c_1 c_2 c_3$ (assuming (3,2) codebook $C_1$) |
|---|---|---|
| 00 | 000 | 111 |
| 01 | 011 | 100 |
| 10 | 101 | 010 |
| 11 | 110 | 001 |

The length-32 codewords are generated in the following procedures.

(1) A length-3 component codeword $c_1 c_2 c_3$ is generated as shown in Table above;
(2) the component codeword $c_1 c_2 c_3$ is repeated ten times to generate a length-30 sequence; and
(3) the length-30 sequence is concatenated with the original CCFI bits $b_1 b_2$.

The resulting four codewords of codebook A corresponding to each codeword of codebook $C_2$ are:

$$000\ 000\ 000\ 000\ 000\ 000\ 000\ 000\ 000\ 000\ 00 \quad (cw1)$$
$$011\ 011\ 011\ 011\ 011\ 011\ 011\ 011\ 011\ 011\ 01 \quad (cw\ 2)$$
$$101\ 101\ 101\ 101\ 101\ 101\ 101\ 101\ 101\ 101\ 10 \quad (cw\ 3)$$
$$110\ 110\ 110\ 110\ 110\ 110\ 110\ 110\ 110\ 110\ 11 \quad (cw\ 4)$$

Codebook A

In another embodiment of the current invention, when the CCFI has only three states (i.e., CCFI is any three of "00", "01", "10" and "11"), then any of the three codewords in the above set may be used to carry the CCFI information.

In another embodiment of the present invention, the codebook generated above is column-wise permuted in order to fit the K 1x2 RU resource configuration, which has a total of 4K coded bits. In this permutation method, based on the sequential concatenation of the repeated codewords, K repetitions of 3-bit component codeword are assigned to the K RUs (leaving one bit open at each RU), and then the remaining K bits are mapped separately to the K RUs. Other codewords of codebook A may deviate in the same method. The resulting codebook deviated from codebook A is called Codebook B as shown below. The codebook B may be better than codebook A in fading channels, since a full repetition to an RU is mapped as much as possible.

$$0000\ 0000\ 0000\ 0000\ 0000\ 0000\ 0000\ 0000\quad (cw\ 1)$$
$$0110\ 0111\ 0111\ 0110\ 0111\ 0111\ 0110\ 0111\quad (cw\ 2)$$
$$1011\ 1010\ 1011\ 1011\ 1010\ 1011\ 1011\ 1010\quad (cw\ 3)$$
$$1101\ 1101\ 1100\ 1101\ 1101\ 1100\ 1101\ 1101\quad (cw\ 4)$$

Codebook B

In another embodiment of the current invention, a variation of the codebook A may obtained by mapping the CCFI bits to codebook C1, instead of codebook C2. The same repetition and concatenation used in generating this new codebook, called codebook C.

$$111\ 111\ 111\ 111\ 111\ 111\ 111\ 111\ 111\ 111\ 00\quad (cw\ 1)$$
$$100\ 100\ 100\ 100\ 100\ 100\ 100\ 100\ 100\ 100\ 01\quad (cw\ 2)$$
$$010\ 010\ 010\ 010\ 010\ 010\ 010\ 010\ 010\ 010\ 10\quad (cw\ 3)$$
$$001\ 001\ 001\ 001\ 001\ 001\ 001\ 001\ 001\ 001\ 11\quad (cw\ 4)$$

Codebook C

In another embodiment of the current invention, same column-wise permutation as stated above is applied to Codebook C in order to generate Codebook D.

$$1111\ 1111\ 1111\ 1111\ 1111\ 1111\ 1110\ 1110\quad (cw\ 1)$$
$$1001\ 1000\ 1000\ 1001\ 1000\ 1000\ 1000\ 1001\quad (cw\ 2)$$
$$0100\ 0101\ 0100\ 0100\ 0101\ 0100\ 0101\ 0100\quad (cw\ 3)$$
$$0010\ 0010\ 0011\ 0010\ 0010\ 0011\ 0011\ 0011\quad (cw\ 4)$$

Codebook D

In another embodiment of the current invention, when the CCFI has only three states, any three codewords in a given codebook (e.g, Codebook A, B, C, D, etc) may be used to carry the CCFI information.

**BRIEF DESCRIPTION OF THE DRAWINGS**

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

Figure 1 is an illustration of an Orthogonal Frequency Division Multiplexing (OFDM) transceiver chain having transmitter chain and receiver chain;
Figure 2 shows an Alamouti 2×1 space-time diversity scheme;
Figure 3 shows an Alamouti 2×1 space-frequency scheme;
Figure 4 shows an example of a method of a column-wise permutation; and
Figures 5A and 5B are flowcharts illustrating procedural steps of transmitting and receiving CCFI according to different embodiments of the present invention.

**DETAILED DESCRIPTION OF THE INVENTION**

Several approaches of coding and transmit diversity have beeen proposed for both the Category 0 bits and ACK/NACK channels. In the 3GPP standard RAN1 meeting in May 2007, the Category 0 bits have been renamed as CCFI (Control Channel Format Indicator). In the practice of the principle of the present invention, a few additional coding methods as well as frequency domain resource mapping methods for the transmission of CCFI channel are disclosed. Here, the CCFI is also known as PCFICH (Physical Control Format Indicator Channel).

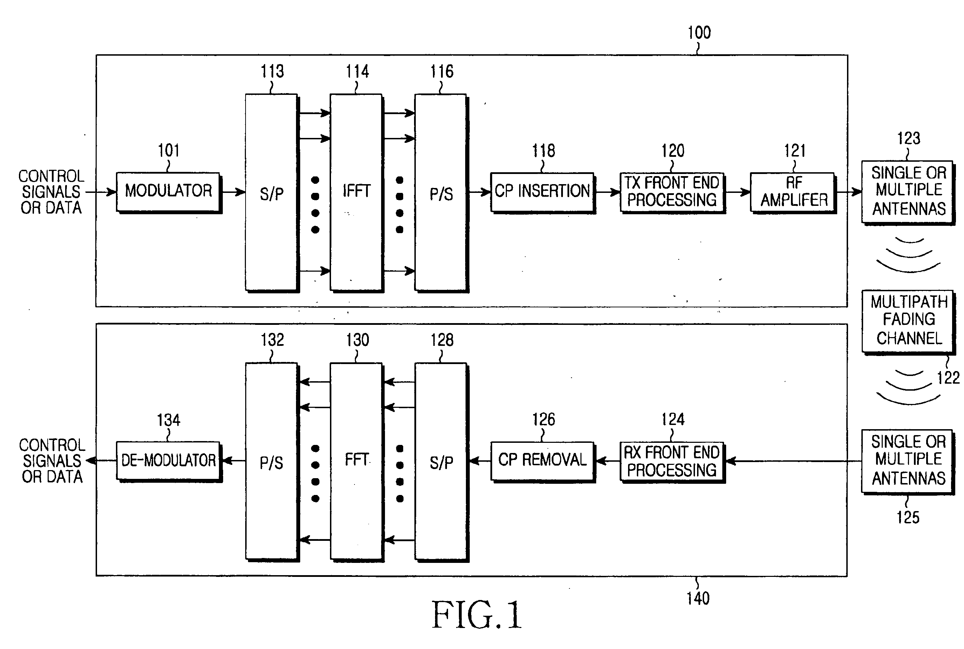

Orthogonal Frequency Division Multiplexing (OFDM) is a technology to multiplex data in frequency domain. Modulation symbols are carried on frequency sub-carriers. Figure 1 illustrate of an Orthogonal Frequency Division Multiplexing (OFDM) transceiver chain having a transmitter chain and a receiver chain. A sample of Orthogonal Frequency Division Multiplexing (OFDM) transceiver chain is shown in Figure 1. At a transmitter chain 100, control signals or data signals are modulated by a modulator 101 and and the modulated signals are serial-to-parallel converted by a serial-to-parallel convertor 112. An Inverse Fast Fourier Transform (IFFT) unit 114 is used to transfer the modulated signal or data from frequency domain to time domain, and the modulated signals trasferred to the time domain is parallel-to-serial converted by a parallel-to-serial convertor 116. A cyclic prefix (CP) or zero prefix (ZP) is added to each OFDM symbol at a CP insertion stage 118 to avoid or alternatively, to mitigate the impact due to multipath fading at a multipath fading channel 122. Signals from cyclic prefix (CP) insertion stage 118 are applied to transmitter front end processing unit 120, RF amplifier 121 and then single or multiple antennas 123. Therefore, the signals transmitted by transmitter chain 100 are received by receiver chain 140. At a receiver chain 140, assuming that perfect time and frequency synchronization are achieved, signals received by receiving single or multiple antennas 125 is applied to receiver front end processing unit 124, are processed at a cyclic prefix (CP) removal stage 126 which removes the cyclic prefix (CP) of the received signal. Signals processed in cyclic prefix (CP) removal stage 126 are further serial-to-parallel converted by a serial-to-parallel convertor 128. A Fast Fourier Transform (FFT) unit 130 transfers the received signals from the time domain to the frequency domain for further processing, including parallel-to-serial conversion by a parallel-to-serial convertor 132 and being demodulation by signal demodulator 134.

The total bandwidth in an OFDM system is divided into narrowband frequency units called subcarriers. The number of subcarriers is equal to the FFT/IFFT size N used in the system. In general, the number of subcarriers used for data is less than N because some of the subcarriers located at the edge of the frequency spectrum are reserved as guard subcarriers. As a general rule, no information may be transmitted on guard subcarriers.

A typical cellular radio system includes a collection of fixed base stations (BS) that define a radio coverage area or a cell. Typically, a non-line-of-sight (NLOS) radio propagation path exists between a base station and a mobile station due to natural and man-made objects that are situated between the base station and the mobile station. As a consequence, the radio waves propagate via reflections, diffractions and scattering. The arriving waves at the mobile station (MS) in the downlink direction (at the BS in the uplink direction) experience constructive and destructive additions because of different phases of the individual waves. This is due the fact that, at the high carrier frequencies typically used in the cellular wireless communication, small changes in the differential propagation delays introduce large changes in the phases of the individual waves. Additionally, when the MS is moving or changes occur in the scattering environment, the spatial variations in the amplitude and phase of the composite received signal will manifest themselves as the time variations known as Rayleigh fading or fast fading. The time-varying nature of the wireless channel requires very high signal-to-noise ratio (SNR) in order to provide desired bit error or packet error reliability.

Diversity is widely used to combat the effects of fast fading. The idea is to provide the receiver with multiple faded replicas of the same information-bearing signal. On the assumption of independent fading of the signals broadcast by each of the antenna branches, the probability, that the instantaneous SNR is below a certain threshold on each branch is approximately $p^L$, where p is the probability that the instantaneous SNR is below the certain threshold on each antenna branch. L is the number of antenna branches. From a system operation viewpoint, "antenna branch" is also known as "antenna ports", and it indicates the number of antennas at the base station.

The methods of diversity that are suitable for use fall into the following categories: space, angle, polarization, field, frequency, time and multipath diversity. Space diversity may be achieved by using multiple transmit or receive antennas. The spatial separation between the multiple antennas is chosen so that the diversity branches experience fading with little or no correlation of the signals during the transit between the transmitting and receiving antennas. Transmit diversity uses multiple transmitting antennas in order to provide the receiver with multiple uncorrelated replicas of the same signal. Transmit diversity schemes may further be divided into open loop transmit diversity and closed-loop transmit diversity schemes. In an open loop transmit diversity approach, no feedback is required from the receiver. In one known arrangement of a closed loop transmit diversity, the receiver computes the phase and amplitude adjustment that should be applied at the transmitter antennas to maximize the received signal power at the receiver. In another arrangement of the closed loop transmit diversity referred to as selection transmit diversity (STD), the receiver provides feedback information to the transmitter on antenna(s) to be used for transmission.

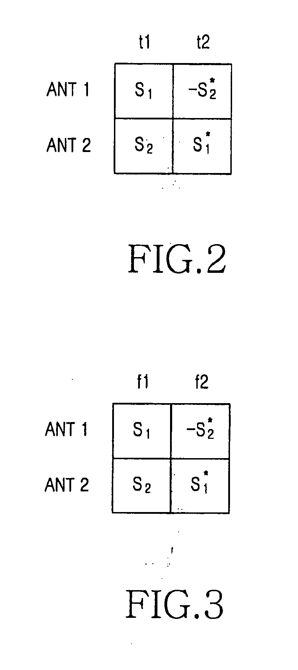

An example of open-loop transmit diversity scheme is the Alamouti 2×1 space-time diversity scheme. Figure 2 shows an Alamouti 2×1 space-time diversity scheme. In this approach during any symbol period, two data symbols are transmitted simultaneously from the two transmit antennas ANT 1 and ANT2. Suppose during the first symbol interval t1, the symbols transmitted from ANT1 and ANT2 are denoted as $S_1$ and $S_2$ respectively as shown in Figure 2. During the next symbol period, the symbols transmitted from ANT1 and ANT2 are $-S_2^*$ and $S_1^*$ respectively where $x^*$ represents the complex conjugate of x. With certain processing at the receiver, original symbols $S_1$ and $S_2$ may be recovered. Here, the instantaneous channel gain estimates h1 and h2 on ANT 1 and ANT 2, respectively, are required for faithful recovery at the receiver. This requires separate pilot symbols on both of the antennas in order to provide channel gain estimation at the receiver. The diversity gain achieved by Alamouti coding is the same as that which may be achieved in Maximum Ratio Combining (MRC).

A $2 \times 1$ Alamouti scheme may also be implemented in a space -frequency coded form. Figure 3 shows a 2X1 Alamouti scheme implemented in a space-frequency coded form. In this case, the two symbols are sent on two different frequencies, i.e., subcarriers f1 and f2, for example, on different subcarriers in an Orthogonal Frequency Division Multiplexing (OFDM) system as shown in Figure 3. When implemented in a space-frequency coded form in the open-loop transmit diversity scheme, the $2 \times 1$ Alamouti space-frequency diversity scheme illustrated by Figure 3 shows an Alamouti $2 \times 1$ space-frequency diversity scheme in which during any symbol period, two data symbols are transmitted simultaneously from the two transmit antennas ANT1 and ANT2. If during the first frequency f1, the symbols transmitted from ANT1 and ANT2 are denoted as $S_1$ and $S_2$ respectively as shown in Figure 3. During the next symbol period, the symbols transmitted from ANT1 and ANT2 are $-S_2^*$ and $S_1^*$ respectively where $x^*$ represents the complex conjugate of x. Original symbols $S_1$ and $S_2$ may be recovered by the receiver. Here, the instantaneous channel gain estimates h1 and h2 on ANT1 and ANT 2, respectively, are required for faithful recovery at the receiver. This requires separate pilot symbols on both of the antennas in order to provide channel gain estimation at the receiver. The diversity gain achieved by Alamouti coding is the same as that which may be achieved in Maximum Ratio Combining (MRC).

The received signals $r_1$ and $r_2$ at the mobile station in subcarrier f1, r1, and in subcarrier f2, r2, may be written as:

$$\begin{aligned} r_1 &= h_1 s_1 + h_2 s_2 + n_1 \\ r_2 &= -h_1 s_2^* + h_2 s_1^* + n_2 \end{aligned} \qquad (1)$$

where h1 and h2 are channel gains from ANT1 and ANT2 respectively. The assumption here is that the channel from a given antenna does not change between subcarriers f1 and f2. The mobile station performs equalization on the received signals and combines the two received signals (r1 and r2) in order to recover the symbols S1 and S2.

$$\begin{aligned} \hat{s}_1 &= h_1^* r_1 + h_2 r_2^* \\ &= h_1^* (h_1 s_1 + h_2 s_2 + n_1) + h_2 (-h_1 s_2^* + h_2 s_1^* + n_2)^* \\ &= (|h_1|^2 + |h_2|^2) s_1 + h_1^* n_1 + h_2 n_2^* \\ \hat{s}_2 &= h_2^* r_1 + h_1 r_2^* \\ &= h_2^* (h_1 s_1 + h_2 s_2 + n_1) + h_1 (-h_1 s_2^* + h_2 s_1^* + n_2)^* \\ &= (|h_1|^2 + |h_2|^2) s_2 + h_2^* n_1 + h_1 n_2^* \end{aligned} \qquad (2)$$

It may be seen that both the transmitted symbols S1 and S2 achieve full spatial diversity.

The term Dynamic Category 0 (Cat 0) bits is a LTE terminology used by the 3GPP LTE standard body. The role of Cat0 is to support dimensioning (scaling) of the downlink control channel by indicating the number of downlink and uplink scheduling grants. The current working assumption is that the dynamic Cat0 bits have a maximum size of two bits, and should be transmitted during every subframe where a control channel element (CCE) is present. The information conveyed by Cat0 bits includes, but is not limited to, the number of OFDM symbols used for all control channels in the subframe. The transmit diversity of the Cat0 bits is not finalized, and it is one of the objectives of the present invention to provide a simple and efficient transmission and reception diversity scheme that is enable to capture both spatial and frequency diversity in the channel. Several approaches of coding and transmit diversity have been discussed for both the Category 0 bits and ACK/NACK channels. In the 3GPP standard RAN1 meeting in May 2007, the Category 0 bits have been renamed as CCFI (Control Channel Format Indicator). In the present invention, one additional coding method is proposed, as well as frequency domain resource mapping methods for the transmission of CCFI channel.

In addition, it was proposed to use a (3,2,2) binary linear code to map the two Cat0 bits into a 3-bit codeword $c_1 c_2 c_3$, and to assign this codeword belongs to a codebook of size four with a minimum Hamming distance two between any pairs of codewords. A linear code (n,k,d) means a code with each codeword length of n coded bits, and each codeword correspond to a message with length k information bits. The minimum hamming distance of the codebook is d. Once the 3-bit codeword is specified, it will be repeated and rate-matched to fit the 2K channel symbols that are going to be used for the Cat0 bits. A (3,2) codebook is a short-hand notation of (3,2,2) code. One example of the (3,2) codebook is $c_1c_2c_3 \in$ C={111, 100, 010 001}.

In one embodiment of the present invention, it is proposed to code the CCFI channel using a concatenation of repeated (3,2) codewords and uncoded CCFI bits, for the case where the total codeword length is not an integer multiple of three. Because the size of (3,2) codebook as above presented is three and thus it is important to provide a CCFI coding method in a case where the length of a coded CCFI is not an integer multiple of three.

For example, when a total number of K 1x2 resource units (RU) are assigned to the CCFI channel, there are 2K channel symbols and 4K channel bits, assuming QPSK modulation on each channel symbol. Here, 1x2 RU occupies one OFDM symbol and two neighboring subcarriers. For example, when K=8 RUs, there are 2K=16 channel symbols and 32 coded bits. 32 is not an integer multiple of three.

As shown in Table 1, a mapping between the 2 bits CCFI and the component codewords in a (3,2) codebook is established. Table 1 is a mapping between CCFI bits and component codewords as shown above. Here, the (3,2) codebook is $c_1c_2c_3 \in$ C$_2$ = {000, 011, 101, 110}. Note the above shown (3,2) codebook is equivalent to $c_1c_2c_3 \in$ C$_1$ {111, 100, 010 001}. CCFI bits b$_1$ and b$_2$ are original CCFI bits. Component codewords of two (3,2) codebooks C$_1$ and C$_2$ corresponding to each state of CCFI bits are shown in Table 1.

**Table 1: Mapping between CCFI bits and component codewords.**

| CCFI bits $b_1b_2$ | Component codeword $c_1c_2c_3$ (assuming (3,2) codebook C$_2$) | Component codeword $c_1c_2c_3$ (assuming (3,2) codebook C$_1$) |
|---|---|---|
| 00 | 000 | 111 |
| 01 | 011 | 100 |
| 10 | 101 | 010 |
| 11 | 110 | 001 |

Four codewords with length of 32 generated for the CCFI bits $b_1b_2$ are shown as follows, for the example above. Here, (3,2) codebook C$_2$ are used. The length-32 codewords are generated by modulator 101 with the following procedural steps.

(1) A length-3 component codeword $c_1c_2c_3$ is generated as shown in Table 1;
(2) the component codeword $c_1c_2c_3$ is repeated ten times to generate a length 30 sequence; and
(3) the length-30 sequence is concatenated with the original CCFI bits $b_1b_2$.

Here, the codeword $c_1c_2c_3$ is repeated [4$K$/3] times, and the resulting sequence is concatenated with the original CCFI bits $b_1b_2$. This concatenated bit sequence is the final channel bit sequence to be modulated and mapped into channel symbol.

The resulting four codewords of codebook A corresponding to each codeword of codebook C$_2$ are:

$$000\ 000\ 000\ 000\ 000\ 000\ 000\ 000\ 000\ 000\ 00 \quad (cw1)$$
$$011\ 011\ 011\ 011\ 011\ 011\ 011\ 011\ 011\ 011\ 01 \quad (cw\ 2)$$
$$101\ 101\ 101\ 101\ 101\ 101\ 101\ 101\ 101\ 101\ 10 \quad (cw\ 3)$$
$$110\ 110\ 110\ 110\ 110\ 110\ 110\ 110\ 110\ 110\ 11 \quad (cw\ 4)$$

Codebook A

In another embodiment of the current invention, if the CCFI has only three states (i.e., CCFI is any three of "00", "01", "10" and "11"), then any of the 3 codewords in the above set may be used to carry the CCFI information.

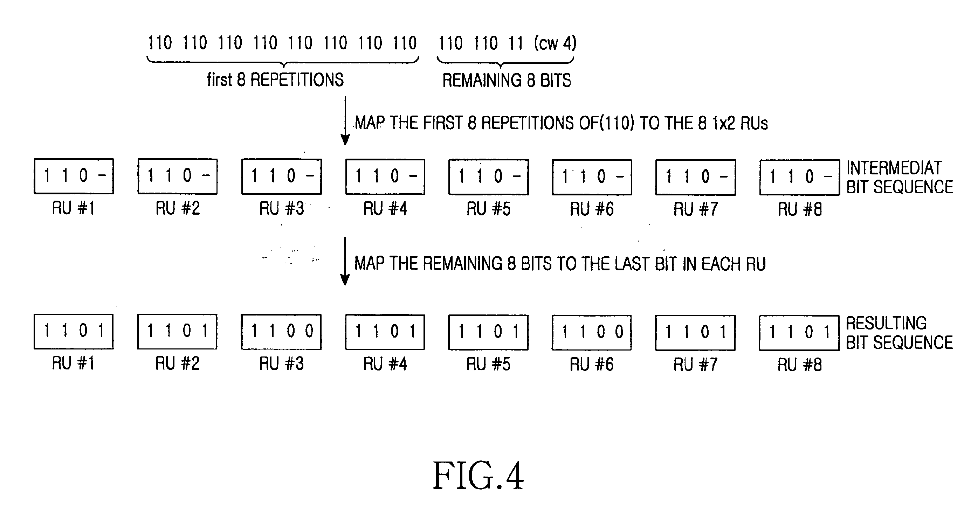

In another embodiment of the present invention, the codebook generated above is column-wise permuted to fit the K 1x2 RU resource configuration, which has a total of 4K coded bits. Figure 4 shows an example of a method of a column-wise permutation. In this permutation method, based on the sequential concatenation of the repeated codewords, K repetitions of 3-bit component codeword are assigned to the K RUs (leaving one bit open at each RU), and then the remaining K bits are mapped separately to the K RUs. The permutation of CW4 is illustrated in Figure 4. Other codewords of codebook A may be deviated in the same method. The resulting codebook deviated from codebook A is called Codebook B as shown below. The codebook B may be better than codebook A in fading channels, since a full repetition to an RU is mapped as much as possible.

$$0000\ 0000\ 0000\ 0000\ 0000\ 0000\ 0000\ 0000\ \ (\mathrm{cw}1)$$
$$0110\ 0111\ 0111\ 0110\ 0111\ 0111\ 0110\ 0111\ \ (\mathrm{cw}2)$$
$$1011\ 1010\ 1011\ 1011\ 1010\ 1011\ 1011\ 1010\ \ (\mathrm{cw}3)$$
$$1101\ 1101\ 1100\ 1101\ 1101\ 1100\ 1101\ 1101\ \ (\mathrm{cw}4)$$

Codebook B

In another embodiment of the current invention, a variation of the codebook A may obtained by mapping the CCFI bits to codebook C1, instead of codebook C2, as shown in Table 1. The same repetition and concatenation used in generating this new codebook, called codebook C.

$$111\ 111\ 111\ 111\ 111\ 111\ 111\ 111\ 111\ 111\ 00\ \ (\mathrm{cw}1)$$
$$100\ 100\ 100\ 100\ 100\ 100\ 100\ 100\ 100\ 100\ 01\ \ (\mathrm{cw}2)$$
$$010\ 010\ 010\ 010\ 010\ 010\ 010\ 010\ 010\ 010\ 10\ \ (\mathrm{cw}3)$$
$$001\ 001\ 001\ 001\ 001\ 001\ 001\ 001\ 001\ 001\ 11\ \ (\mathrm{cw}4)$$

Codebook C

In another embodiment of the current invention, same column-wise permutation as shown in Figure 4 is applied to Codebook C and Codebook D is obtained.

$$1111\ \ 1111\ 1111\ 1111\ 1111\ 1111\ 1110\ 1110\ \ (\mathrm{cw}1)$$
$$1001\ \ 1000\ 1000\ \ 1001\ 1000\ 1000\ 1000\ 1001\ \ (\mathrm{cw}2)$$
$$0100\ \ 0101\ 0100\ \ 0100\ 0101\ 0100\ 0101\ 0100\ \ (\mathrm{cw}3)$$
$$0010\ \ 0010\ 0011\ \ 0010\ 0010\ 0011\ 0011\ 0011\ \ (\mathrm{cw}4)$$

Codebook D

In another embodiment of the current invention, when the CCFI has only three states, any three codewords in a given codebook (e.g, Codebook A, B, C, D, etc) may be used to carry the CCFI information.

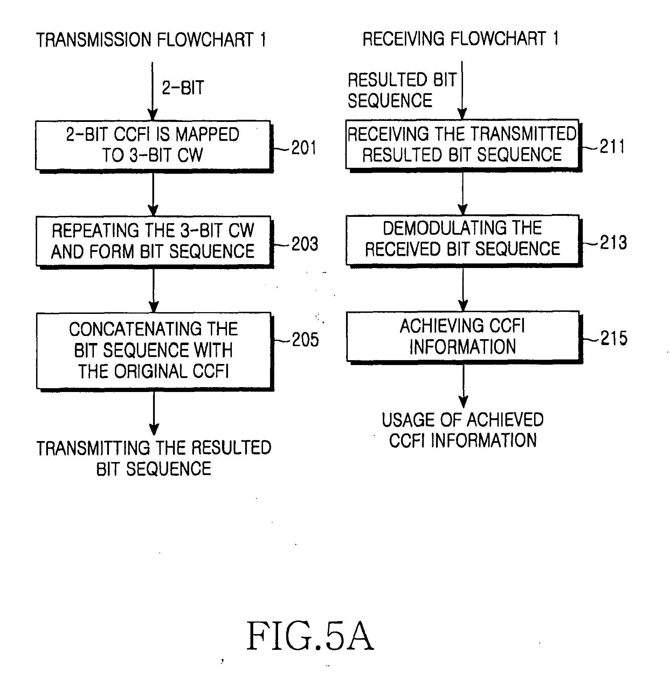

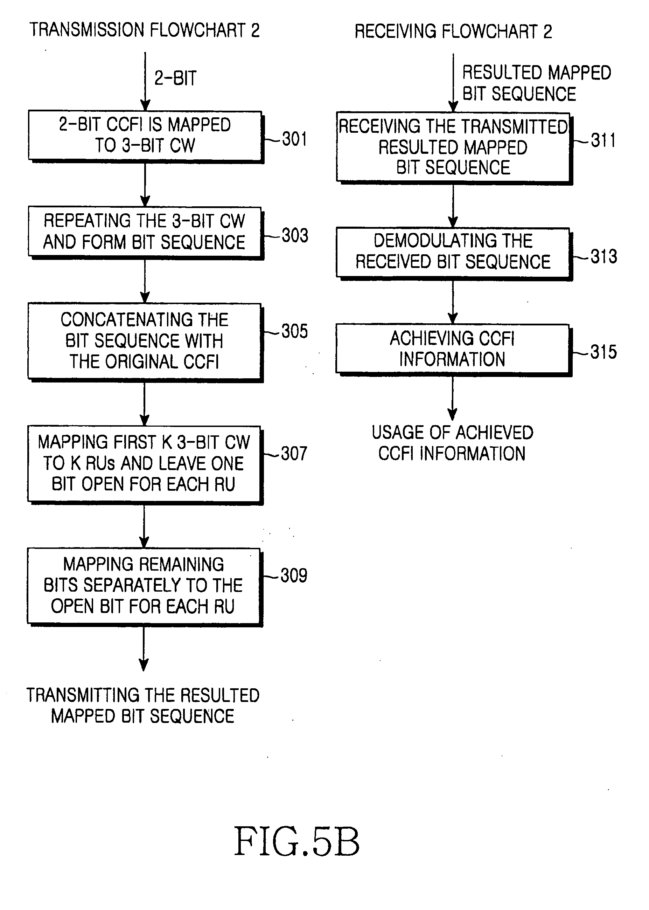

Figures 5A and 5B are flowcharts illustrating procedural steps of transmitting and receiving CCFI according to different embodiments of the present invention.

In Figure 5A, the procedure of generating Codebooks A and C are presented. When the CCFI is transmitted at a transmitter, two-bit CCFI is mapped to 3-bit codeword of codebook C1 or C2 as shown in Table 1 at step 201, the three-bit codeword is repeated for a predetermined times with the number of the predetermined time being a flooring of quotient $[4K/3]$, where K is the number of resource units at step 203, the resulting bit sequence is concatenated with the original CCFI bits at step 205 and thus a final bit sequence is generated and transmitted at transmitting antennas. At the receiver side, the receiving antennas receive the transmitted resulting bit sequence from the transmitter at step 211, a demodulator of the receiver demodulates the received bit sequence at step 213, and the receiver achieves the information carried by CCFI at step 215 and thus the achieved information carried by the CCFI is utilized by the receiver.

In Figure 5B, the procedure of generating Codebooks B and D are presented. When the CCFI is transmitted at a transmitter, two-bit CCFI is mapped to three-bit codeword of codebook C 1 or C2 as shown in Table 1 at step 301, the three-bit codeword is repeated for a predetermined times with the number of the predetermined time being a quotient of 4K/3 where K is the number of resource units at step 303, the resulting bit sequence is concatenated with the original CCFI bits at step 305 and thus a bit sequence is generated. Here, the bit sequence may be illustrated as cw 4 shown in Figure 4. At step 307, leading K repetitions of the three-bit codeword as shown in Table 1 in the resulting bit sequence is mapped to the number of K resource units respectively with one bit of each of resource units being open, and the remaining K bits of the bit sequence are separately mapped to the open bit of each of the number of K resource units at step 309. Step 307 may be illustrated as the intermediate RU#1-RU#8 each having one bit open as shown in the intermediate bit sequence shown in Figure 4. Step 309 may be illustrated as the final RU#1-RU#8 each having four bits allocated as shown by the resulting bit sequence shown in Figure 4. The resulting mapped bit sequences are transmitted by the transmitting antennas. At the receiver side, the receiving antennas receive the transmitted resulting bit sequence from the transmitter at step 311, a demodulator of the receiver demodulates the received bit sequence at step 313, and the receiver achieves the information carried by CCFI at step 315 and thus the achieved information carried by the CCFI is utilized by the receiver.

Modulator 101 and IFFT 114 of transmitter 100 include microprocessors based controller. Demodulator. 134 and FFT 130 of receiver 140 include microprocessors based controller.

**Claims**

1. A method for transmitting a control channel format indicator, the method comprising the steps of:

   mapping a plurality of two-bit CCFI (Control Channel Format Indicator) into one selected from a first codebook and a second codebook, with the plurality of CCFI being selected from a group consisting of "00", "01", "10" and "11" , and with the first codebook comprising codewords selected from a group consisting of component codewords "000", "011", "101" and "110" corresponding to a designated CCFI and the second codebook comprising codewords selected from a component codeword group consisting of component codewords "111", "100", "010" and "001" corresponding to the designated CCFI;
   generating a sequence of codewords selected from either the first codebook or the second codebook by repeating the selected component codeword for predetermined times, with the predetermined times being determined by a flooring of quotient $[4K/3]$, where K is a number of resource units occupying one Orthogonal Frequency Division Multiplexing (OFDM) symbol and two neighboring subcarriers;
   generating a codeword by concatenating the sequence of the selected component codewords with the original designated CCFI bits; and
   transmitting the codeword carrying information of CCFI.

2. The method of Claim 1, when CCFI has four states consisting "00", "01", "10" and "11" , further comprising a step of generating a third codebook comprising four codewords by concatenating the sequence of the component codewords selected from the first codebook with the designated CCFI to which the selected component codeword corresponds and the four codewords being "000 000 000 000 000 000 000 000 000 000 00", "011 011 011 011 011 011 011 O11 011 011 01", "101 101 101 101 101 101 101 101 101 101 10" and "110 110 110 110 110 110 110 110 110 110 11" with the four codewords being corresponding the designated CCFI.

3. The method of Claim 1, when CCFI has three states selected from the group consisting of "00", "01", "10" and "11", further comprising a step of generating the third codebook comprising three codewords by concatenating the sequence of component codewords selected from the first codebook with the designated CCFI to which the selected component codeword corresponds and the three codewords being selected from a group consisting of "000 000 000 000 000 000 000 000 000 000 00", "011 011 011 011 011 011 011 011 011 011 01", "101 101 101 101 101 101 101 101 101 101 10" and "110 110 110 110 110 110 110 110 110 110 11" with the three codewords being corresponding the designated CCFI

4. The method of Claim 1, when CCFI has four states consisting "00", "01", "10" and "11", further comprising a step of generating a fourth codebook comprising four codewords by concatenating the sequence of component codewords selected from the second codebook with the designated CCFI to which the selected component codeword corresponds and the four codewords being "111 111 111 111 111 111 111 111 111 111 00", "100 100 100 100 100 100 100 100 100 100 01","010 010 010 010 010 010 010 010 010 010 10" and "001 001 001 001 001 001 001 001 001 001 11" with the four codewords being corresponding the designated CCFI.

5. The method of Claim 1, when CCFI has three states selected from the group consisting of "00", "01", "10" and "11", further comprising a step of generating the fourth codebook comprising three codewords by concatenating the sequence of component codewords selected from the second codebook with the designated CCFI to which the selected component codeword corresponds and the three codewords being selected from a group consisting of "111 111 111 111 111 111 111 111 111 111 00", "100 100 100 100 100 100 100 100 100 100 01", "010 010 010 010 010 010 010 010 010 010 10" and "001 001 001 001 001 001 001 001 001 001 11" with the three codewords being corresponding the designated CCFI.

**6.** The method of Claim 2, when CCFI has four states consisting "00", "01", "10" and "11", further comprising a step of generating a permutation of each of the four codewords by mapping a leading K repetitions of the three-bit component codeword in the four codewords to the number of K resource units respectively with one bit of each of resource units being open and mapping remaining K bits of each of the four codewords separately to the open bit of each of the number of K resource unit.

**7.** The method of Claim 6, when CCFI has four states consisting "00", "01", "10" and "11", further comprising a step of generating a fifth codebook having four codewords and the four codewords being "0000 0000 0000 0000 0000 0000 0000 0000", "0110 0110 0110 0110 0110 0110 0110 0110", "1011 1011 1011 1011 1011 1011 1011 1011" and "1101 1101 1101 1101 1101 1101 1101 1101" with the four codewords being corresponding the designated CCFI..

**8.** The method of Claim 4, when CCFI has four states consisting "00", "01", "10" and "11", further comprising a step of generating a permutation of each of the four codewords by mapping the leading K repetitions of the three-bit component codeword in the four codewords to the number of K resource units respectively with one bit of each of resource units being open and mapping the remaining K bits of each of the four codewords separately to the open bit of each of the number of K resource units.

**9.** The method of Claim 8, when CCFI has four states consisting "00", "01", "10" and "11", further comprising generating a sixth codebook having four codewords and the four codewords being "1111 1111 1111 1111 1111 1111 1111 1111", "1001 1001 1001 1001 1001 1001 1001 1001", "0100 0100 0100 0100 0100 0100 0100 0100" and "0010 0010 0010 0010 0010 0010 0010 0010" with the four codewords being corresponding the designated CCFI.

**10.** The method of Claim 7, when CCFI has three states selected from the group consisting of "00", "01", "10" and "11", further comprising a step of generating the fifth codebook having three codewords and the three codewords being selected from "0000 0000 0000 0000 0000 0000 0000 0000", "0110 0110 0110 0110 0110 0110 0110 0110", "1011 1011 1011 1011 1011 1011 1011 1011" and "1101 1101 1101 1101 1101 1101 1101 1101" with the three codewords being corresponding the designated CCFI.

**11.** The method of Claim 9, when CCFI has three states selected from the group consisting of "00", "01", "10" and "11", further comprising a step of generating the sixth codebook having three codewords and the three codewords being selected from "1111 1111 1111 1111 1111 1111 1111 1111", "1001 1001 1001 1001 1001 1001 1001 1001", "0100 0100 0100 0100 0100 0100 0100 0100" and "0010 0010 0010 0010 0010 0010 0010 0010" with the three codewords being corresponding the designated CCFI.

**12.** An apparatus, comprising:

a coder mapping a plurality of two-bit CCFI (Control Channel Format Indicator), into one selected from a first codebook and a second codebook, with the plurality of CCFI being selected from a group consisting of "00", "01", "10" and "11" , and with the first codebook comprising codewords selected from a group consisting of component codewords "000", "011", "101" and "110" corresponding to a designated CCFI and the second codebook comprising codewords selected from a component codeword group consisting of component codewords "111", "100", "010" and "001" corresponding to the designated CCFI; generating a sequence of codewords selected from either the first codebook or the second codebook by repeating the selected component codeword for predetermined times, with the predetermined times being determined by a flooring of quotient [4$K$/3], where K is a number of resource units occupying one Orthogonal Frequency Division Multiplexing (OFDM) symbol and two neighboring subcarriers; and generating a codeword by concatenating the sequence of the selected components codewords with the original designated CCFI bits; and
an RF amplifier enabling transmission of the codeword carrying information of CCFI.

123 SINGLE OR MULTIPLE ANTENNAS

122 MULTIPATH FADING CHANNEL

125 SINGLE OR MULTIPLE ANTENNAS

121 RF AMPLIFER

120 TX FRONT END PROCESSING

124 RX FRONT END PROCESSING

118 CP INSERTION

126 CP REMOVAL

116 P/S

128 S/P

114 IFFT

130 FFT

113 S/P

132 P/S

101 MODULATOR

134 DE-MODULATOR

100

140

CONTROL SIGNALS OR DATA

CONTROL SIGNALS OR DATA

FIG.1

|  | t1 | t2 |
|---|---|---|
| ANT 1 | $S_1$ | $-S_2^*$ |
| ANT 2 | $S_2$ | $S_1^*$ |

## FIG.2

|  | f1 | f2 |
|---|---|---|
| ANT 1 | $S_1$ | $-S_2^*$ |
| ANT 2 | $S_2$ | $S_1^*$ |

## FIG.3

110 110 110 110 110 110 110 110   110 110 11  (cw 4)

first 8 REPETITIONS          REMAINING 8 BITS

↓ MAP THE FIRST 8 REPETITIONS OF(110) TO THE 8 1x2 RUs

| 1 1 0 – | 1 1 0 – | 1 1 0 – | 1 1 0 – | 1 1 0 – | 1 1 0 – | 1 1 0 – | 1 1 0 – | INTERMEDIAT BIT SEQUENCE |

RU #1    RU #2    RU #3    RU #4    RU #5    RU #6    RU #7    RU #8

↓ MAP THE REMAINING 8 BITS TO THE LAST BIT IN EACH RU

| 1 1 0 1 | 1 1 0 1 | 1 1 0 0 | 1 1 0 1 | 1 1 0 1 | 1 1 0 0 | 1 1 0 1 | 1 1 0 1 | RESULTING BIT SEQUENCE |

RU #1    RU #2    RU #3    RU #4    RU #5    RU #6    RU #7    RU #8

FIG.4

EP 2 015 504 A2

TRANSMISSION FLOWCHART 1

↓ 2-BIT

| 2-BIT CCFI IS MAPPED TO 3-BIT CW | ~201 |

↓

| REPEATING THE 3-BIT CW AND FORM BIT SEQUENCE | ~203 |

↓

| CONCATENATING THE BIT SEQUENCE WITH THE ORIGINAL CCFI | ~205 |

↓

TRANSMITTING THE RESULTED BIT SEQUENCE

RECEIVING FLOWCHART 1

RESULTED BIT SEQUENCE ↓

| RECEIVING THE TRANSMITTED RESULTED BIT SEQUENCE | ~211 |

↓

| DEMODULATING THE RECEIVED BIT SEQUENCE | ~213 |

↓

| ACHIEVING CCFI INFORMATION | ~215 |

↓

USAGE OF ACHIEVED CCFI INFORMATION

# FIG.5A

TRANSMISSION FLOWCHART 2

2-BIT

┌─────────────────────────┐
│ 2-BIT CCFI IS MAPPED    │ ~301
│ TO 3-BIT CW             │
└─────────────────────────┘

┌─────────────────────────┐
│ REPEATING THE 3-BIT CW  │ ~303
│ AND FORM BIT SEQUENCE   │
└─────────────────────────┘

┌─────────────────────────┐
│ CONCATENATING THE       │ ~305
│ BIT SEQUENCE WITH       │
│ THE ORIGINAL CCFI       │
└─────────────────────────┘

┌─────────────────────────┐
│ MAPPING FIRST K 3-BIT CW│ ~307
│ TO K RUs AND LEAVE ONE  │
│ BIT OPEN FOR EACH RU    │
└─────────────────────────┘

┌─────────────────────────┐
│ MAPPING REMAINING       │ ~309
│ BITS SEPARATELY TO THE  │
│ OPEN BIT FOR EACH RU    │
└─────────────────────────┘

TRANSMITTING THE RESULTED
MAPPED BIT SEQUENCE

RECEIVING FLOWCHART 2

RESULTED MAPPED
BIT SEQUENCE

┌─────────────────────────┐
│ RECEIVING THE TRANSMITTED│ ~311
│ RESULTED MAPPED         │
│ BIT SEQUENCE            │
└─────────────────────────┘

┌─────────────────────────┐
│ DEMODULATING THE        │ ~313
│ RECEIVED BIT SEQUENCE   │
└─────────────────────────┘

┌─────────────────────────┐
│ ACHIEVING CCFI          │ ~315
│ INFORMATION             │
└─────────────────────────┘

USAGE OF ACHIEVED
CCFI INFORMATION

FIG.5B

15